# EUROPEAN PATENT SPECIFICATION

(11) **EP 3 339 672 B1**
(45) Date of publication and mention of the grant of the patent: **11.12.2019**
(21) Application number: 17207954.3
(22) Date of filing: 18.12.2017
(51) Int. Cl.: F16D 65/12

(54) **DISC FOR DISC BRAKE SYSTEMS AND METHOD FOR MANUFACTURING THEREOF**
BREMSSCHEIBE UND HERSTELLUNGSVERFAHREN DAFÜR
DISQUE DE FREIN ET SON PROCÉDÉ DE FABRICATION

(30) Priority: 22.12.2016 IT 201600129917
(43) Date of publication of application: 27.06.2018
(73) Proprietor: Brembo SGL Carbon Ceramic Brakes S.p.A., 24040 Stezzano (BG) (IT); Freni Brembo S.p.A., 24035 Curno (Bergamo) (IT)
(72) Inventor: BONFANTI, Roberto, 24035 CURNO (BG) (IT); MILESI, Andrea, 24035 CURNO (BG) (IT); PIAVANI, Riccardo, 24035 CURNO (BG) (IT); TIRONI, Giovanni Mario, 24035 CURNO (BG) (IT)
(74) Representative: Brasca, Marco

(56) References cited:
- EP-A1- 2 522 875
- WO-A1-2012/101561
- US-A1- 2010 084 231
- US-A1- 2011 290 602
- US-A1- 2012 186 919
- US-A1- 2014 158 486

## Description

### Field of the invention

The present invention relates to a brake disc for disc brake systems and to the method for the production thereof. In particular, the invention relates to brake discs for high performance vehicles, provided with a braking crown or band made of a composite material with a carbonaceous matrix, coaxially with and inside which a metal bell-like element is provided, integrally connected thereto. Discs with a carbonaceous matrix as referred to are also known as carbon discs or as carbon-ceramic discs. More particularly, the invention concerns the optimization of the coupling area between the braking crown or band and the corresponding bell-like coaxial element.

### Background of the invention

It is known for instance about European patent application published with no. EP2980436, issued to the same Applicant. This application describes a brake disc in which the braking crown or band, made of a composite material, is apt to be made as one piece with a bell-like metal element, coaxially concentric with respect to the braking band or crown, by co-melting. In this case the braking crown or band is shaped so as to form a plurality of three-dimensional protrusions arranged around a symmetry axis X-X common to said coaxial elements (crown or band and bell). The three-dimensional protrusions of the braking crown or band consist of a group of polygonal surfaces basically joined square-edged. The band is then placed inside a mold, each pair of adjacent protrusions defining a seat apt to receive the melted aluminum alloy during co-melting of the bell with the band made of composite material. Once the aluminum alloy is hardened and the mold and the casting spout are removed, the metal alloy of the bell will form the projecting casting elements engaged with the seats defined by the protrusions of the band made of composite material.

Co-melting commonly means the positioning of a band made of a composite, carbon-ceramic, carbon or other material inside a suitable mold provided with casting spouts; a melted metal material, typically an aluminum alloy, is made to flow through the casting spouts according to predefined temperature and pressure parameters: the melted metal material hardens building a raw bell integral with the braking band, which once the finishing operations are over will connect the band-bell assembly to a corresponding hub.

Document US 2012/186919 discloses a brake rotor having a visible design feature. The brake rotor comprises: a rotor body having a primary portion and a visible design portion, wherein the primary portion consists of a metal; and the visible design portion consists of a mixed-material composite including a porous structure and the metal.

Document US 2014/158486 discloses a disc brake rotor which has a support hub and a coaxial braking band. The support hub has a plurality of radial seats and the braking band has a plurality of connecting elements which transfer torque between the band and the hub. The connecting elements are integral and made as one piece with the braking band and extend from the braking band in order to engage the corresponding radial seats. The connecting elements are surrounded by walls which are integral and made as one piece with the support hub such as to be fastened in the axial direction and in the tangential direction, but capable of sliding in the radial direction.

Document US 2011/290602 discloses a brake rotor that is made in part by a cast-in-place process in which a first component of a first material is cast-over by a second component of a second material.

Document US 2010/084231 discloses a brake disc comprising a support bell, intended for being connected to a wheel hub of a vehicle, and a braking band intended for cooperating with a caliper arranged astride of the brake disc. The braking band comprises two flanges connected by a plurality of connecting elements that define ventilation channels. Driving elements are placed between the braking band and the bell to improve the efficiency of the ventilation inside the braking band, as well as the mechanical deformation of the brake disc during the braking step.

Document WO 2012/101561 discloses a disc for disc brakes comprising a brake band in a first material suitable for the braking action and having at least one extension for coupling to a bell suitable for coupling the disc to a hub of a vehicle. The coupling extension is a single piece with said brake band and forms a geometric coupling with said bell to transmit the braking action.

Document EP 2 522 875 discloses a method for producing a compound cast brake disc. The method involves preparing an annular frictional ring using casting operation. A cooling channel is applied on the annular frictional ring and a disk-shaped inner core is utilized in the friction ring. The inner core is directly attached to two parts of a receiver so that a radial outer core ring forms webs for limiting the cooling channel and an inner core disk is inserted in a core ring through a core mark in a form-fitting manner, where the inner core disk forms the receiver via molded slugs.

### Aim of the invention

In the framework of the continuous evolution of high technology braking systems, especially for high performance vehicles, the Applicants are constantly striving for solutions aiming on one side to comply with the basic principle of reducing the inertia of unsprung masses (which include brake discs) and on the other to manufacture high performance brake discs made of composite material.

The Applicants have thus obtained a new optimization of the connection between bell and braking band, which enables to reduce the global inertia of the brake disc, maintaining and increasing at the same time the transfer characteristics of mechanical braking loads between braking surfaces, bell and hub of a vehicle.

In other words, this means a better distribution of mechanical shear forces between the elements of the brake disc itself and between the latter and the hub.

The Applicants have further observed that the optimization of the connecting surfaces between the bell and the braking band made of composite material also enables a better uniformity of heat exchange between the components, resulting in a reduction of dangerous or anyway unnecessary thermal stresses and in an increased reliability and safety of braking systems designed to use brake discs according to the present invention.

Within this framework of optimizing the manufacturing the parts making up a brake disc, the Applicants have thus obtained a basic reduction of bell volume, thus optimizing and reducing the mass and therefore the inertia thereof.

By using high performance materials and alloys, with the proposed solutions the Applicants can also significantly reduce the costs for the bell and for the system in general, also further simplifying the manufacturing and finishing processes of brake discs with braking band made of composite material and bell made of aluminum alloy, co-molded one with the other.

### Summary of the invention

The Applicants have found that these objectives can be achieved providing the braking band made of composite material with a circular inner edge, integral therewith, equipped with a polar series of hollows apt to receive and contain, during co-melting, a melted aluminum alloy coming from dedicated casting spouts for making the braking band as one piece with the bell being formed by co-melting. More specifically, according a first aspect, the present invention relates to a brake disc comprising a metal bell and a braking band radially external with respect to the latter, said band and said bell extending around a common axis of symmetry; said braking band being made of a composite material and having side braking surfaces apt to cooperate with a related brake caliper exerting a braking action with respect to the vehicle on which said brake disc is installed; said side surfaces further defining a plurality of radially arranged ventilation channels; wherein said metal bell is at least partially co-melted onto said braking band radially outside the latter; said braking band being characterized in that it is provided with a continuous planar inner ring equipped with a median plane and with two side faces, on at least one of which a polar series of hollows is obtained, which do not interfere with said median plane, said hollows radially developing from the inner free end towards the outside of said braking band, so as to be able to receive a melted metal alloy during co-melting of said bell with said braking band, so as to define within each one of said hollows a joint area for stress transfer between said bell and said braking band.

Each side face of said continuous planar inner ring is provided with a respective polar series of hollows which do not interfere with said median plane, said hollows developing radially from the inner free end towards the outside of said braking band.

According to another aspect of the present invention, said hollows are present in an odd number.

In a further aspect, according to the one immediately preceding, said hollows of said polar series have been suitably selected as prime number 19, so as to interrupt the cycling and symmetry with respect to the radial ventilation channels, thus improving the global ventilation and cooling properties of the brake disc according to the invention.

Another aspect envisages that said hollows of said polar series radially arranged on the continuous planar inner ring of the band occupy and define an angular sector ***α*** of less than 10°.

Another aspect according to the invention envisages that said hollows of said polar series, obtained on at least one of said side faces of said continuous planar inner ring, are arranged asymmetrically offset with respect to said ventilation channels.

In another aspect, according to the first aspect of the present invention, the joint area between said bell and said braking band develops on a basically delimited plane.

According to the preceding aspect, said braking band is made by co-molding with disposable core.

Another particular aspect envisages that said band is made of carbon-ceramic material.

However, another aspect envisages that said braking band is made of carbon.

In one aspect according to the first aspect of the present invention, said hollows are polygonal in shape.

In another aspect according to the preceding one, said hollows have a polygonal shape similar to a semicircular shape.

A further aspect according to the first aspect of the present invention envisages that said hollows have a semicircular shape with draft surfaces.

In particular, the Applicants have ascertained that the geometrical shape of the hollows, which are semicircular of polygonal similar to a semicircular shape, improves the interaction between the braking band made of composite material and the metal bell, co-molded one with the other, ensures a highly reliable connection between the parts and achieves at the same time optimal performances of stress transfer from the braking band to the bell and thus to the vehicle hub.

The Applicants have further ascertained that the particular shape, number and arrangement of the hollows according to the present invention enable to reduce local thermal stresses after the braking step, improving at the same time the effectiveness of the ventilation channels.

The Applicants have ascertained that a brake disc according to the invention is manufactured according to simpler and therefore cheaper methods.

The present invention, in one of more of the aspects mentioned above, may contain one or more of the preferred characteristics described below.

Preferably, said composite material of said braking band comprises ceramic material reinforced with carbon fibers.

Preferably, the metal bell is made of a high performance aluminum alloy and is completely co-melted with said braking band made of composite material.

In other words and in short, according to the various aspects of the invention, the joint surface between the braking band and the bell has a small height so as to make it easier for the melted metal to flow into the co-melting process, reducing at the same time the stressing and non-uniformity effects in the bell ventilation process.

It is thus possible to reduce the fastening area of the brake disc to the hub by reducing the bell volume, which turns into an optimization of the mass and cost of the bell itself.

Advantageously, the new planar joint area between braking band and bell also enables the use of carbon-ceramic braking bands obtained with the molding process with disposable cores, which can be typically used with geometries having a mainly flat development.

Other basic aspects of the present invention necessarily relate to the characteristics of the methods for molding, co-melting, cooling, joining as one piece and finishing the elements making up the brake disc.

A method for manufacturing a brake disc for related disc brake systems according to the preceding aspects, comprises in combination and in sequence:
- a first molding step with disposable cores of a braking band made of carbon-ceramic material so as to form a joint area developing mainly with a
- planar geometry, having draft surfaces and apt to receive a metal bell made as one piece with it,
- a second step in which said molded braking band is placed in a foundry mold equipped with suitable casting spouts,
- a third co-melting step in which a melted metal alloy is injected according to predefined pressure parameters so as to occupy the joint area and form a metal bell having small weight and size,
- a fourth step in which said metal bell co-melted with said braking band made of carbon-ceramic material is cooled down and made as one piece with the latter,
- a fifth step in which the foundry mold is removed, the pattern and heights of said bell are finished and the holes joining said bell with a vehicle hub are formed.

### Brief description of the drawings

Further characteristics and advantages will be more apparent from the following description referred to preferred, though non-limiting, embodiments of a brake disc according to the present invention.

The description will refer in the following, by way of non-limiting example, to the accompanying drawings, in which:
- Figure 1 is a perspective view of a brake disc according to the invention,
- Figure 2 is a perspective view of a sectioned portion of an element of Figure 1,
- Figure 3 shows a magnified detail of Figure 2,
- Figure 4 is a different perspective view of the sectioned portion of Figure 2,
- Figure 5 shows magnified sectioned details of the elements of Figures 1 to 4,
- Figure 6 shows the same magnified details of Figure 5 before the finishing step,
- Figure 7 is a perspective view of a sectioned portion of a different embodiment which is not part of the present invention,
- Figure 8 shows a magnified detail of Figure 7,
- Figure 9 is a different perspective view of the sectioned portion of Figure 7,
- Figure 10 shows magnified sectioned details of the elements of Figures 7 to 9, and
- Figure 11 shows the same magnified details of Figure 10 before the finishing step.

### Detailed description

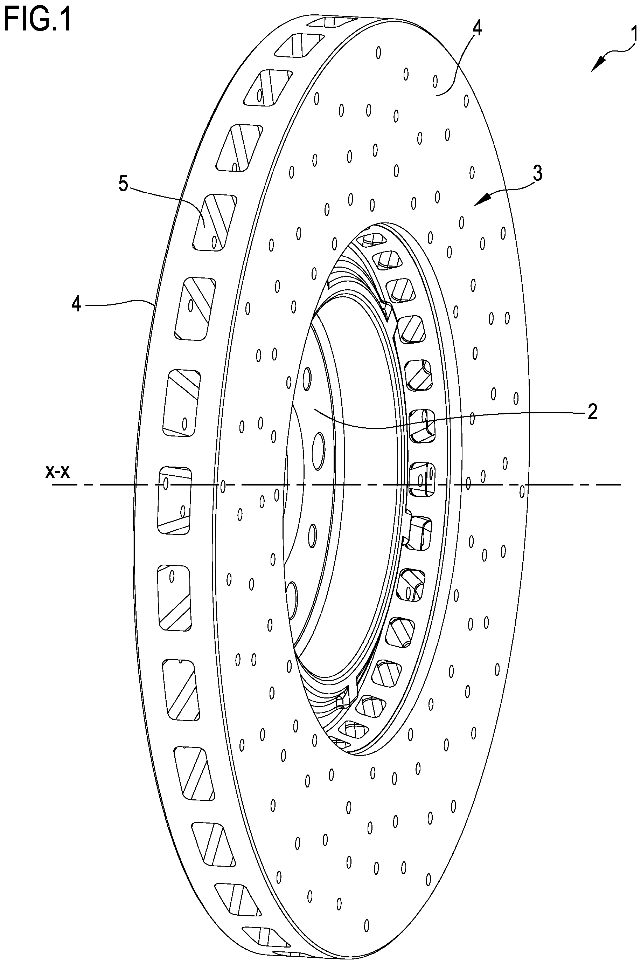

Referring to Figure 1, the numeral 1 designates a brake disc for disc brake systems according to the invention.

The brake disc 1 comprises and is made up of a metal bell 2 and a braking band 3 radially external with respect to the latter. The metal bell 2 and the braking band 3 extend around a common central axis of symmetry designated with X-X.

The braking band 3, made of composite material e.g. of carbon-ceramic type, is provided with two side braking surfaces designated with 4, which are apt to be engaged by a brake caliper (not shown) of a disc brake system. A plurality of ventilation channels 5 is defined and formed between the two side surfaces 4 belonging to the braking band.

The braking band 3 is equipped with a continuous inner ring 6 in which M-M designates the median plane thereof.

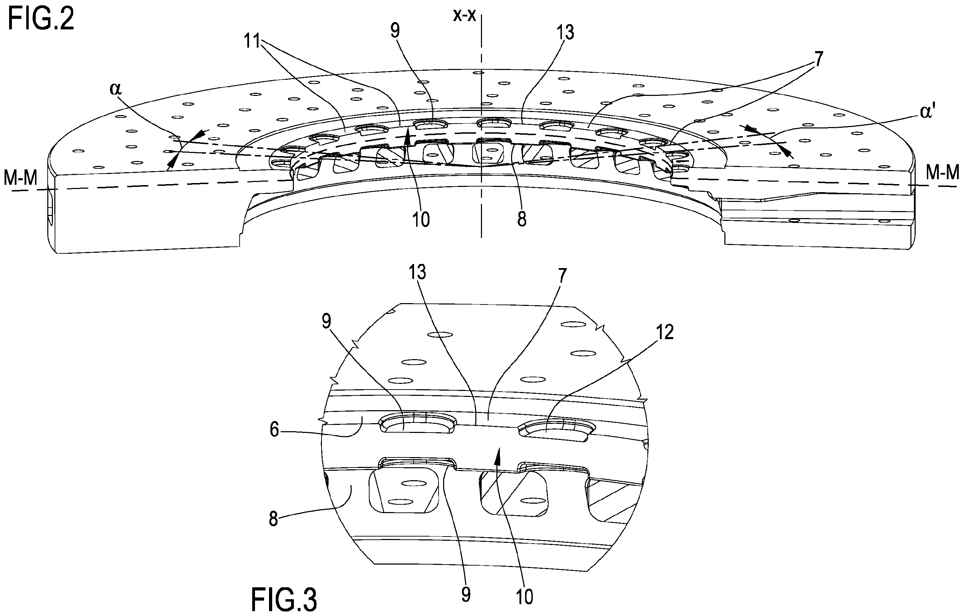

Referring to Figures 2 and 3 and in accordance with the preferred embodiment to be selected, a polar or circumferential series of hollows 9 developing from the free end 10 of the continuous inner ring 6 towards the outside of the braking band 3, without interfering with the median plane M-M of the continuous inner ring 6, is formed on the side surface 7 or on the side surface 8 of the continuous inner ring 6 or also on both of said surfaces 7 and 8.

It is thus easy to understand what is meant by partial co-melting between bell 2 and braking band 3 or complete, total co-melting of the elements 2 and 3.

The hollows 9, formed and/or arranged in any manner, thus define a joint area 11 between bell 2 and braking band 3 having a basically flat development so as to avoid, according to a first embodiment, the interference thereof with the median plane M-M of the continuous inner ring 6. Advantageously, this new planar geometry of the joint area 11 also enables the use of carbon-ceramic braking bands obtained with the molding process with disposable cores.

Preferably, the hollows 9 have a semicircular shape designated with 12 (with rounded corners) with draft surfaces. It should however be understood that other embodiments of the hollows 9 are possible, e.g. with polygonal shape similar or not to the aforesaid semicircular shape.

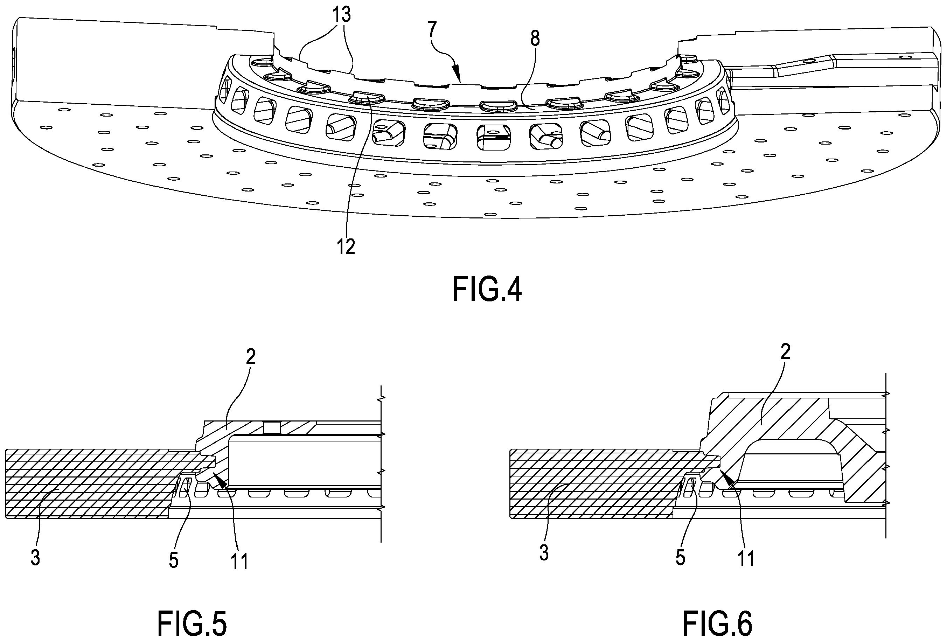

Figures 5 and 6 show in a sectioned view magnified details of the joint area between bell 2 and braking band 3 after and before the operations of mechanical finishing of the bell 2, respectively. These figures point out the basically flat development of the joint area 11 and the small size of the bell 2, both finished and immediately after the co-melting step (Figure 6).

The 19 hollows 9 uniformly and constantly distributed along the inner edge 6 will thus occupy an angular sector α of 1/19 of 360°.

Likewise, the gaps 13 between a hollow 9 and the following one will also occupy an angular sector α' of 1/19 of 360°.

Suitably, this particular shape of the joint area, together with the 19 hollows 9 formed circumferentially along the inner ring of the braking band 3, enables to obtain some further, important advantages of the present invention:
- the joint surface 11 between the bell 2 and the braking band 3 is small in height and has a basically flat development,
- it is easier for the melted metal material to flow into the co-melting process,
- the stressing and non-uniform cooling effects of the bell are reduced,
- as a result, also the mass and cost of the bell are reduced.

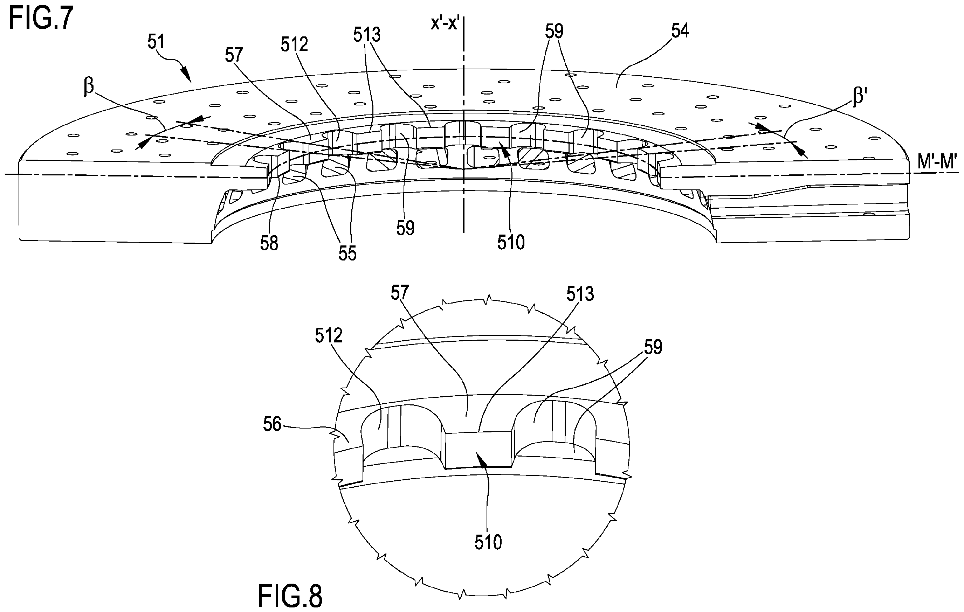

A different embodiment, which is not part of the present invention, is shown in Figures 7 to 11 and relates to a brake disc 51, which here again comprises and is made up of a metal bell 52 and a braking band 53 radially external with respect to the latter. The metal bell 52 and the braking band 53 extend around a common central axis of symmetry designated with X'-X'.

The braking band 53, made of composite material e.g. of carbon-ceramic type, is provided with two side braking surfaces designated with 54, which are apt to be engaged by a brake caliper (not shown) of a disc brake system. A plurality of ventilation channels 55 is defined and formed between the two side surfaces 54 belonging to the braking band 53.

The braking band 53 is equipped with a continuous inner ring 56 in which M'-M' designates the median plane thereof.

Referring to Figures 7 and 8 and in accordance with this embodiment, on the side surface 57 and on the side surface 58 of the inner ring 56, the polar or circumferential series of hollows developing from the free end 510 of the inner ring 56 towards the outside of the braking band 53 is formed so that these conversely interfere with the median plane M'-M' of the inner ring 56, so that intersecting it they form a radial plurality of recesses 59 arranged along said inner ring. These recesses 59 will receive a melted metal alloy during the co-melting step of the bell 52 with the braking band 53.

Also the recesses 59, formed and/or arranged in any manner, thus define a joint area 511 between bell 52 and braking band 53 with a basically flat development, which advantageously enables also the use of carbon-ceramic braking bands obtained with the molding process with disposable cores.

Preferably, also the recesses 59 have a semicircular shape designated with 512 (with rounded corners) with draft surfaces. It should however be understood that other embodiments of the recesses 59 are possible, e.g. with polygonal shape similar or not to the aforesaid semicircular shape.

Also according this embodiment, the recesses 59 are provided as 19 and arranged in a uniform and constant manner along the inner edge 56 so as to occupy an angular sector β of 1/19 of 360°.

Likewise, the gaps 513 between a recess 59 and the following one will occupy an angular sector β' of 1/19 of 360°.

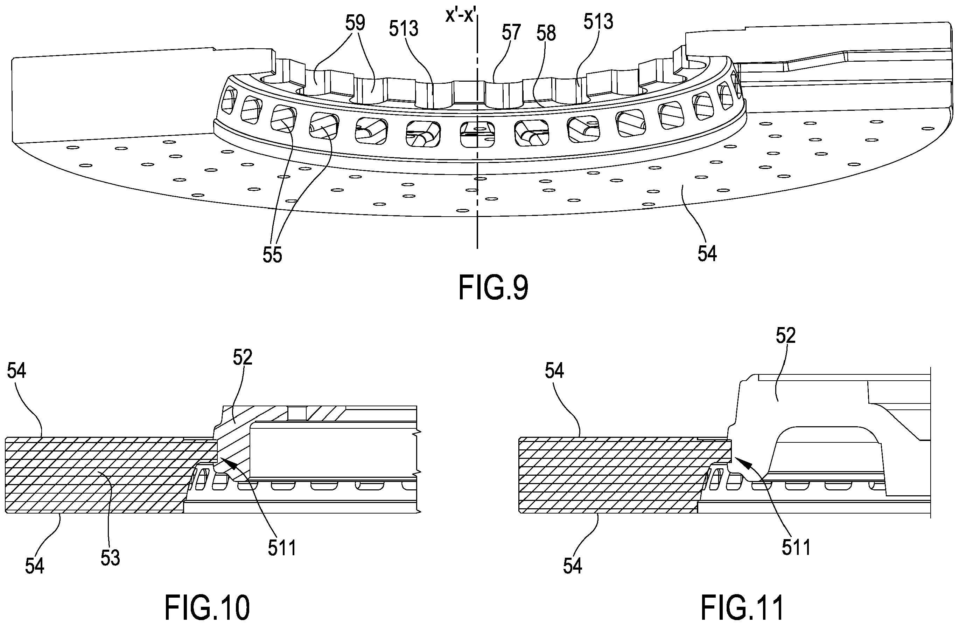

Figures 10 and 11 show in a sectioned view magnified details of the joint area between bell 52 and braking band 53 after and before the operations of mechanical finishing of the bell 52, respectively. These figures point out the basically planar development of the joint area 511 and the small size of the bell 52, both finished (Figure 10) and immediately after the co-melting step (Figure 11).

The characteristics common to both embodiments as described should be understood as merely descriptive and non-limiting.

Also according to this embodiment, suitably, the particular shape of the joint area 511, together with the particular selection of the number of recesses 59 found in prim number 19, enables to obtain some further, important advantages:
- the joint surface 511 between the bell 52 and the braking band 53 has a basically flat geometry with a small height,
- it is easier for the melted metal material to flow into the co-melting process,
- the stressing and non-uniform cooling effects of the bell 52 are reduced,
- as a result, also the mass and cost of the bell 52 are reduced.

The common, basically flat development with respect to the three-dimensional space occupied by the bell and by the braking band, enables an important reduction of the material made of aluminum metal alloy forming the bell during the co-melting step, thus clearly affecting the inertia of the brake disc and ensuring the compliance with the principle of reduction of unsprung masses of a vehicle, resulting in an improved general efficiency of a braking system using a brake disc according to the present invention.

Moreover, still from the technical point of view, a brake disc according to the invention will achieve a high efficiency in the cooling step after the braking action.

In general, after obtaining a braking band 3 equipped with hollows 9, 59 shaped in any manner by molding with disposable cores, the band 3 and the bell made of aluminum alloy are co-melted. The band is placed in a cavity of a foundry mold and the aluminum alloy is cast through suitable casting spouts. The melted aluminum alloy occupies the hollows 9 or the recesses 59. Once solidified and cooled, the aluminum alloy will form, as soon as it is removed from the mold, a raw bell (Figures 6 and 11) and then, after a finishing step, a bell 2, 52 as shown in the details of Figures 5 and 10.

Further advantages of a brake disc according to the present invention are certainly a lower cost thanks to the smaller amount of metal material used and to the improved and simplified manufacturing methods.

## Claims

1. A brake disc (1) comprising a metal bell (2) and a braking band (3) radially external in respect to the latter, said band (3) and said bell (2) extending around a common axis of symmetry (x-x); said braking band (3) being made of a composite material and having side braking surfaces (4) apt to cooperate with a related brake caliper exerting a braking action with respect to the vehicle on which said brake disc (1) is installed; said side surfaces (4) further defining a plurality of radially arranged ventilation channels (5); wherein said metal bell (2) is at least partially co-melted onto said braking band (3) radially outside the latter; said braking band (3) being provided with a continuous planar inner ring (6) equipped with a median plane (M-M) and with two side faces (7, 8); **characterized in that** a respective polar series of hollows (9) which do not interfere with said median plane (M-M) is provided on each side face of said continuous planar inner ring (6); said hollows (9) radially developing from an inner free end (10) towards an outside of said braking band (3), so as to receive a melted metal alloy during the co-melting step of said bell (2) with said braking band (3) and to define within each one of said hollows (9) a joint area (11) for stress transfer between said bell (2) and said braking band (3).

2. The brake disc according to claim 1, wherein said joint area (11) for stress transfer between said bell (2) and said braking band (3) has a basically planar development.

3. The brake disc according to claim 1, wherein said hollows (9) of said polar series are arranged asymmetrically offset with respect to said ventilation channels (5).

4. The brake disc according to claim 1, wherein there are nineteen of said hollows (9).

5. The brake disc according to claim 1, wherein each of said hollows (9) occupies and defines an angular sector α of less than 10°.

6. The brake disc according to claim 1, wherein said hollows (9) have a semicircular shape with draft surfaces.

7. The brake disc according to claim 1, wherein said hollows (9) are present in an odd number

8. The brake disc according to claim 1, wherein said composite material of said braking band (3) comprises ceramic material reinforced with carbon fibers.

9. The brake disc according to claim 1, wherein said metal alloy is an aluminum alloy.

10. A method for manufacturing a brake disc for related disc brake systems according to one of claims 1 to 9, comprising in combination and in sequence:
- a first molding step with disposable cores of a braking band (3) made of carbon-ceramic material so as to form a joint area (11) developing mainly with a planar geometry, having draft surfaces and apt to receive a metal bell (2) made as one piece with it,
- a second step in which said molded braking band (3) is placed in a foundry mold equipped with suitable casting spouts,
- a third co-melting step in which a melted metal alloy is injected according to predefined pressure parameters so as to occupy the joint area (11) and form a metal bell (2) having small weight and size,
- a fourth step in which said metal bell (2) co-melted with said braking band (3) made of carbon-ceramic material is cooled down and made as one piece with the latter,
- a fifth step in which the foundry mold is removed, the pattern and heights of said bell (2) are finished and the holes joining said bell (2) with a vehicle hub are formed.

## Patentansprüche

1. Bremsscheibe (1), welche eine Metallglocke (2) und ein Bremsband (3) umfasst, welches in Bezug auf das letztere radial außen ist, wobei sich das Band (3) und die Glocke (2) um eine gemeinsame Symmetrieachse (x-x) erstrecken, wobei das Bremsband (3) aus einem Verbundmaterial hergestellt ist und seitliche Bremsoberflächen (4) aufweist, welche geeignet sind, mit einem zugehörigen Bremssattel zusammenzuwirken, welcher eine Bremsbetätigung in Bezug auf das Fahrzeug ausübt, an welchem die Bremsscheibe (1) installiert ist, wobei die seitlichen Oberflächen (4) ferner eine Mehrzahl von radial angeordneten Belüftungskanälen (5) definieren, wobei die Metallglocke (2) wenigstens teilweise auf das Bremsband (3) radial außerhalb des letzteren zusammengeschmolzen ist, wobei das Bremsband (3) mit einem kontinuierlichen ebenen inneren Ring (6) bereitgestellt ist, welcher mit einer Mittelebene (M-M) und zwei Seitenflächen (7, 8) ausgestattet ist,
**dadurch gekennzeichnet, dass**
eine entsprechende Polarserie von Hohlräumen (9), welche nicht in die Mittelebene (M-M) eingreifen, an jeder Seitenfläche des kontinuierlichen ebenen inneren Rings (6) bereitgestellt ist, wobei sich die Hohlräume (9) radial von einem inneren freien Ende (10) in Richtung einer Außenseite des Bremsbandes (3) entfalten, um eine geschmolzene Metalllegierung während des Zusammenschmelzschritts der Glocke (2) mit dem Bremsband (3) aufzunehmen und eine Verbindungsfläche (11) für eine Spannungsübertragung zwischen der Glocke (2) und dem Bremsband (3) innerhalb jedes der Hohlräume (9) zu definieren.

2. Bremsscheibe nach Anspruch 1, wobei die Verbindungsfläche (11) zur Spannungsübertragung zwischen der Glocke (2) und dem Bremsband (3) eine im Wesentlichen ebene Entfaltung aufweist.

3. Bremsscheibe nach Anspruch 1, wobei die Hohlräume (9) der Polarserie asymmetrisch versetzt in Bezug auf die Belüftungskanäle (5) angeordnet sind.

4. Bremsscheibe nach Anspruch 1, wobei neunzehn der Hohlräume (9) vorhanden sind.

5. Bremsscheibe nach Anspruch 1, wobei jeder der Hohlräume (9) einen Winkelsektor α von weniger als 10° belegt und definiert.

6. Bremsscheibe nach Anspruch 1, wobei die Hohlräume (9) eine halbkreisförmige Gestalt mit Steigungsflächen aufweisen.

7. Bremsscheibe nach Anspruch 1, wobei die Hohlräume (9) in einer ungeraden Anzahl vorhanden sind.

8. Bremsscheibe nach Anspruch 1, wobei das Verbundmaterial des Bremsbandes (3) mit Karbonfasern verstärktes Keramikmaterial umfasst.

9. Bremsscheibe nach Anspruch 1, wobei die Metalllegierung eine Aluminiumlegierung ist.

10. Verfahren zum Herstellen einer Bremsscheibe für zugehörige Scheibenbremssysteme nach einem der Ansprüche 1 bis 9, umfassend in Kombination und in Reihenfolge:
- einen ersten Formschritt mit wegwerfbaren Kernen eines Bremsbandes (3), welches aus Karbon-Keramik-Material derart hergestellt ist, dass es eine Verbindungsfläche (11) bildet, die sich hauptsächlich mit einer ebenen Geometrie entfaltet, Steigungsflächen aufweist und dazu geeignet ist, eine Metallglocke (2) aufzunehmen, welche aus einem Stück damit hergestellt ist,
- einen zweiten Schritt, in welchem das geformte Bremsband (3) in einer Gießform, die mit geeigneten Gießstutzen ausgestattet ist, platziert wird,
- einen dritten Zusammenschmelzschritt, in welchem eine geschmolzene Metalllegierung gemäß vordefinierten Druckparametern derart eingespritzt wird, dass sie die Verbindungsfläche (11) belegt und eine Metallglocke (2) mit geringem Gewicht und mit geringer Größe bildet,
- einen vierten Schritt, in welchem die Metallglocke (2), welche mit dem aus Karbon-Metall-Material hergestellten Bremsband (3) zusammengeschmolzen ist, abgekühlt wird und als ein Stück mit dem letzteren hergestellt wird,
- einen fünften Schritt, in welchem die Gießform entfernt wird, die Muster und Erhebungen der Glocke (2) fertiggestellt werden und die Löcher, die die Glocke (2) mit einer Fahrzeugnabe verbinden, ausgebildet werden.

## Revendications

1. Disque de frein (1) comprenant une cloche métallique (2) et une bande de freinage (3) radialement externe par rapport à la dernière, ladite bande (3) et ladite cloche (2) s'étendant autour d'un axe commun de symétrie (x-x) ; ladite bande de freinage (3) étant constituée d'un matériau composite et ayant des surfaces de freinage latérales (4) aptes à coopérer avec un étrier de frein associé exerçant une action de freinage par rapport au véhicule sur lequel ledit disque de frein (1) est installé ; lesdites surfaces latérales (4) définissant en outre une pluralité de canaux de ventilation radialement disposés (5) ; ladite cloche métallique (2) étant au moins partiellement co-fusionnée sur ladite bande de freinage (3) radialement à l'extérieur de la dernière ;
ladite bande de freinage (3) étant munie d'un anneau interne continu plan (6) équipé d'un plan médian (M-M) et de deux faces latérales (7, 8) ;
**caractérisé en ce qu'**une série polaire respective de creux (9) qui n'interfèrent pas avec ledit plan médian (M-M) est disposée sur chaque face latérale dudit anneau interne continu plan (6) ; lesdits creux (9) se développant radialement depuis une extrémité libre interne (10) vers un extérieur de ladite bande de freinage (3), afin de recevoir un alliage de métal fondu durant l'étape de co-fusion de ladite cloche (2) avec ladite bande de freinage (3) et pour définir à l'intérieur de chacun desdits creux (9) une zone de jonction (11) pour le transfert de contrainte entre ladite cloche (2) et ladite bande de freinage (3).

2. Disque de frein selon la revendication 1, dans lequel ladite zone de jonction (11) pour le transfert de contrainte entre ladite cloche (2) et ladite bande de freinage (3) présente un développement basiquement plan.

3. Disque de frein selon la revendication 1, dans lequel lesdits creux (9) de ladite série polaire sont disposés décalés asymétriquement par rapport auxdits canaux de ventilation (5).

4. Disque de frein selon la revendication 1, dans lequel sont présents dix-neuf desdits creux (9).

5. Disque de frein selon la revendication 1, dans lequel chacun desdits creux (9) occupe et définit un secteur angulaire α inférieur à 10°.

6. Disque de frein selon la revendication 1, dans lequel lesdits creux (9) ont une forme semi-circulaire avec des surfaces de dépouille.

7. Disque de frein selon la revendication 1, lesdits creux (9) étant présents en nombre impair.

8. Disque de frein selon la revendication 1, ledit matériau composite de ladite bande de freinage (3) comprenant un matériau céramique renforcé de fibres de carbone.

9. Disque de frein selon la revendication 1, ledit alliage de métal étant un alliage d'aluminium.

10. Procédé de fabrication d'un disque de frein pour systèmes associés de frein à disque selon l'une des revendications 1 à 9, comprenant en combinaison et en séquence :
- une première étape de moulage avec des cœurs jetables d'une bande de freinage (3) constituée de matériau de carbone-céramique afin de former une zone de jonction (11) se développant principalement avec une géométrie plane, ayant des surfaces de dépouille et aptes à recevoir une cloche métallique (2) constituée d'un seul tenant avec elle,
- une seconde étape dans laquelle ladite bande de freinage moulée (3) est placée dans un moule de fonderie muni de becs de coulée appropriés,
- une troisième étape de co-fusion dans laquelle un alliage de métal fondu est injecté selon des paramètres de pression prédéfinis afin d'occuper la zone de jonction (11) et de former une cloche métallique (2) de petit poids et de petite taille,
- une quatrième étape dans laquelle ladite cloche métallique (2) co-fondue avec ladite bande de freinage (3) constituée de matériau de carbone-céramique est refroidie et constituée d'un seul tenant avec cette dernière,
- une cinquième étape dans laquelle le moule de fonderie est retiré, le motif et les hauteurs de ladite cloche (2) sont terminés et les trous joignant ladite cloche (2) à un moyeu de véhicule sont formés.
